# FASCICULE DE BREVET EUROPEEN

(11) **EP 0 720 269 B1**
(45) Date de publication et mention de la délivrance du brevet: **28.01.1998**
(21) Numéro de dépôt: 95440062.8
(22) Date de dépôt: 29.09.1995
(51) Int. Cl.: H02H 7/085

(54) **Dispositif de commande d'arrêt du fonctionnement d'un moteur asynchrone monophasé à condensateur**
Vorrichtung zum Anhalten einer einphasigen Asynchronmaschine mit Kondensator
Stop control device for single-phase asynchronous motor with capacitor

(30) Priorité: 29.12.1994 EP 94440081
(43) Date de publication de la demande: 03.07.1996
(73) Titulaire: ALIADE, 68300 Saint-Louis (FR)
(72) Inventeur: Nassr, Djafar, F-68110 Illzach (FR); Raude, Philippe, F-56100 Lorient (FR); Plumer, Louis, F-90000 Belfort (FR)
(74) Mandataire: Rhein, Alain

(56) Documents cités:
- DE-A- 4 440 449
- DE-U- 9 404 335
- US-A- 5 151 638

## Description

L'invention concerne un dispositif de commande d'arrêt du fonctionnement d'un moteur asynchrone monophasé à condensateur comprenant un bobinage principal et un bobinage auxiliaire, ceci en cas de surcharge de ce moteur par rapport à une valeur seuil. Le document DE-A-4440449 divulgue un dispositif tel que défini par le préambule de la revendication 1.

En fait, il existe déjà, à l'heure actuelle, des dispositifs à même de détecter qu'un moteur asynchrone monophasé à condensateur fonctionne en surcharge et, par conséquent, de commander l'arrêt de ce moteur. Un tel dispositif est notamment décrit dans le document FR-A-2.649.260. Plus précisément, ce dispositif comporte, d'une part, un circuit à même de délivrer une tension continue homothétique de la tension aux bornes du condensateur de déphasage du moteur et, d'autre part, un circuit délivrant une tension constante de référence. Cet ensemble est complété par un circuit comparateur qui vient comparer les deux tensions issues des circuits précédents pour délivrer, en fin de compte, un signal d'arrêt lorsque la tension continue homothétique devient égale ou inférieure à la tension de référence.

Il est par ailleurs prévu que le circuit à même de délivrer la tension de référence soit asservi au réseau, de manière à délivrer une tension à tout moment proportionnelle à la tension du réseau, quelles que soient les variations que subit cette dernière.

En fait, un tel dispositif présente un certain nombre d'inconvénients liés à son manque de fiabilité, son temps de réponse long et aux réglages qu'il nécessite par rapport aux caractéristiques spécifiques de chaque moteur.

Tout particulièrement, l'ensemble est dépendant de la température du moteur, dans la mesure où celle-ci influence la tension aux bornes du condensateur de déphasage. De plus, ce dispositif étant basé sur le principe d'une comparaison de tensions continues, l'on ne peut en déduire un quelconque résultat qu'après écoulement d'un certain temps correspondant à plusieurs alternances de la tension aux bornes dudit condensateur de déphasage. Or, ce retard au niveau du temps de réponse du dispositif peut engendrer de graves incidents. Tout particulièrement dans le cadre de l'application d'un tel moteur asynchrone monophasé pour la commande d'enroulement et de déroulement d'un tablier d'un volet roulant.

Ainsi, bien qu'il soit précisé, dans ce document FR-A-2.649.260, que ce dispositif de commande d'arrêt peut également intervenir pour arrêter le moteur en fin de course d'enroulement et de déroulement du tablier, il faut observer que cela n'est possible que si l'on est prêt à certaines concessions. Notamment, lors de la montée du tablier de volet roulant et en arrivant en fin de course haute, il est fort probable que le retard à la commande d'arrêt du moteur entraîne la mise sous tension du tablier sollicitant, fortement, les liaisons articulées reliant deux lames successives de ce tablier. Comme il est fréquent d'utiliser un même moteur pour différentes tailles de volet roulant, cette mise sous contrainte, résultant du retard à l'arrêt d'un moteur éventuellement surpuissant, peut entraîner la rupture du tablier.

Dans le cas inverse, lors de la descente du tablier du volet roulant, ce retard de la commande d'arrêt du moteur en fin de course basse engendre une mise sous contrainte du dispositif d'anti-soulèvement du tablier du volet roulant dont est généralement équipé ce dernier. Ainsi, là encore, cette mise sous contrainte d'un tel dispositif d'anti-soulèvement, constitué par des moyens d'articulation spécifiques reliant l'arbre d'enroulement à la première lame du tablier, peut être supérieur à la résistance mécanique de l'ensemble.

La solution pourrait, éventuellement, consister à ajuster en conséquence, le seuil défini par la tension constante de référence de manière à rendre le dispositif plus sensible. Toutefois, en raison d'une variation de tension aux bornes du condensateur de déphasage, malgré tout modérée, par rapport au couple du moteur, l'on ne peut rendre le dispositif de commande d'arrêt trop sensible, sans quoi la moindre résistance due aux frottements rencontrés par le tablier lors de sa montée ou de sa descente, entraînerait l'arrêt du moteur de manière intempestive.

Finalement, ce dispositif de commande d'arrêt connu est forcément fonction des caractéristiques du moteur et tout particulièrement de la capacité du condensateur de déphasage, mais aussi de la tension du réseau de sorte qu'il convient, systématiquement, de procéder à des réglages. Ceci est, bien sûr, contraignant lors de la conception du dispositif mais, surtout , il peut y avoir, de ce fait, déréglage dans le temps. Par conséquent, un tel dispositif de commande d'arrêt s'avère, en outre, peu fiable.

Il est également connu, au travers du document US-A.5.151.638, un autre dispositif à même de détecter qu'un moteur fonctionne dans des conditions de surcharge. Dans ce but, ce dispositif examine l'évolution de l'angle de déphasage entre la tension et le courant total aux bornes du moteur. En fait, il est précisé, dans le cadre de ce document, que l'angle de déphasage tend vers zéro lorsque la charge du moteur augmente. Ainsi, selon ce dispositif connu, il est prévu de détecter le passage à zéro de cette tension et du courant, des moyens appropriés étant, alors, à même d'émettre un signal représentatif du temps de retard de l'un par rapport à l'autre. Tout particulièrement, il est utilisé un tore ferromagnétique pour détecter le passage à zéro du courant.

En fait, il convient d'observer que la mesure du déphasage est réalisée sur la tension du secteur alimentant le moteur et le courant total traversant ce dernier. Or, s'il existe bel et bien une relation entre le déphasage de cette tension et ce courant total, d'une part, et la charge du moteur, d'autre part, il ne s'agit pas, d'une façon systématique, d'une relation de proportionnalité. De plus, elle est strictement dépendante des caractéristiques du moteur. Ceci signifie que ces dispositifs doivent être réglés en fonction du moteur commandé, qui plus est, au travers d'opérations de tests et autres. Ceci ne fait qu'augmenter leur coût de revient. En outre, dès l'instant qu'il y a nécessité de réglage, il y a la possibilité de déréglage de sorte que le dispositif s'avère peu fiable.

La présente invention se veut à même de répondre à l'ensemble des inconvénients précités, ceci au travers d'un dispositif de commande d'arrêt du fonctionnement d'un moteur asynchrone monophasé, d'une très grande précision, apte à détecter, de manière quasi instantanée, une surcharge du moteur en vue d'en couper l'alimentation. Cette précision provient également du fait que le seuil de détection de surcharge est quasiment indépendant des paramètres du moteur, tel que la capacité du condensateur de déphasage ou encore la température de fonctionnement de ce moteur.

A cet effet, l'invention concerne un dispositif de commande d'arrêt du fonctionnement d'un moteur asynchrone monophasé à condensateur en cas de détection d'une surcharge de ce moteur par rapport à une valeur seuil, caractérisé par le fait qu'il comporte, d'une part, des moyens de mesure du déphasage, donc du temps de retard, entre l'un quelconque des paramètres, tension ou courant, correspondant à la phase principale ou secondaire et un autre de ces paramètres et, d'autre part, des moyens de commande d'arrêt à même de couper l'alimentation du moteur en cas de mesure d'un temps de retard inférieur à une valeur seuil préférentiellement du type paramétrable en mémoire.

Finalement, l'objet de l'invention consiste à mesurer le temps de retard, non pas entre la tension aux bornes du moteur et le courant total traversant ce dernier, mais entre des paramètres, tension ou courant, correspondant à la phase principale et/ou la phase auxiliaire de ce moteur. Aussi, l'on constate que l'on tient compte de paramètres intérieurs au moteur et non simplement de ceux susceptibles d'être prélevés sur les câbles d'alimentation de ce dernier. Ceci a pour avantage de conduire à une relation de proportionnalité entre la mesure de déphasage effectuée et la charge appliquée au moteur. Il en découle que le dispositif devient quasi indépendant des paramètres de ce dernier, tout particulièrement de la capacité du condensateur de déphasage ou encore de la température de fonctionnement dudit moteur. En outre, il est insensible aux variations de la tension secteur dans une plage normale.

De plus, le dispositif de commande, selon l'invention, a un temps de réponse quasi instantané, puisqu'il est en mesure de détecter une surcharge du moteur à la suite des mesures effectuées sur une alternance.

Selon une autre caractéristique de l'invention, la valeur seuil est paramétrable et le dispositif comporte des moyens de détermination de l'évolution du déphasage entre les paramètres comparés en vue de détecter une variation brutale de cette évolution au travers du calcul de sa dérivée et commander l'arrêt de fonctionnement du moteur.

En quelque sorte, l'on ne vient pas, simplement, détecter le fait que le déphasage est inférieur ou supérieur à une valeur figée, correspondant à la situation où le moteur fourni un couple maximum autorisé, mais on recherche une évolution anormale de ce couple transmis par le moteur issu d'un couple résistant brutalement plus important (ou plus faible) rencontré par ce dernier. Dans ce cas, l'on va, précisément, commander l'arrêt de fonctionnement dudit moteur avant même qu'il ne produise son couple maximum autorisé.

Si l'on prend le cas, tout particulier des volets roulants, l'on observera que pour des questions de standardisation des pièces, mais, également, en raison des coûts de fabrication d'un moteur de petite dimension, il est usuel de se servir d'un seul moteur d'une puissance donnée pour toute une gamme de volets roulants. Dans ce cas, l'on a la possibilité d'ajuster la valeur seuil du déphasage engendrant l'arrêt du moteur en fonction de la puissance que doit fournir, précisément, ce dernier pour obtenir l'enroulement du tablier du volet roulant. Ceci apparaît comme particulièrement contraignant, sachant, d'autant plus, que les volets roulants sont, fréquemment, fabriqués sur mesure et en fonction de l'entrée des commandes. Dans ces conditions, il est nécessaire de procéder au réglage du seuil de détection en reprenant, individuellement, chaque moteur avant son montage sur un volet roulant donné.

Toutefois, même dans ces conditions, le dispositif de commande est en mesure d'intervenir sur le fonctionnement du moteur que lorsque celui-ci fournit un couple d'où résulte un déphasage selon le cas, inférieur ou supérieur à ladite valeur seuil. Ainsi, s'agissant de la commande d'arrêt en fin de course d'enroulement du tablier, l'on observe, tout d'abord, que durant cette phase finale d'enroulement, le moteur ne rencontre guère plus de résistance. Puis, lorsque les arrêts placés sur la lame finale du tablier arrivent en butée, le moteur produit sur ledit tablier un couple minimum au couple maximal autorisé. A cet instant, l'on vient détecter le dépassement du déphasage mesuré par rapport à la valeur seuil entraînant l'arrêt du moteur. Il est évident, dans ces conditions, que le tablier, sous l'action dudit moteur est fortement sollicité, tout particulièrement en ce qui concerne la lame finale dont les arrêts prennent appui sur les butées en conséquence.

Précisément, la présente invention permet d'éviter cela puisque le dispositif est apte, non seulement, de détecter le dépassement d'une valeur seuil par le déphasage mesuré, mais une variation brutale de ce déphasage qui est exploitée, là encore, pour la commande d'arrêt de fonctionnement du moteur, ceci avant même qu'il n'ait eu le temps de produire le couple maximum autorisé. Une telle caractéristique permet, par conséquent, d'éviter tout risque de détérioration du volet roulant en cas d'un blocage quelconque quelle que soit la puissance du moteur.

D'autres buts et avantages de la présente invention apparaîtront au cours de la description qui va suivre se rapportant à un exemple de réalisation illustré dans les dessins joints en annexe, dans lesquels :
- la figure 1 représente un schéma synoptique d'un moteur asynchrone monophasé à condensateur ;
- la figure 2 représente un schéma synoptique de l'ensemble électronique comportant le dispositif selon l'invention ;
- la figure 3 est une représentation graphique du signal correspondant à la tension du secteur ;
- la figure 4 est la transformation du signal de la tension en un signal sensiblement carré apte à être interprété sous forme d'une commande logique ;
- la figure 5 est une représentation graphique du signal correspondant au courant traversant le bobinage principal ;
- la figure 6 est la transformation du signal du courant en un signal sensiblement carré apte à être interprété sous forme d'une commande logique ;
- la figure 7 est une représentation synoptique d'un exemple de schéma électronique destiné à la transformation en un signal carré du courant traversant, soit la phase principale, soit la phase secondaire ;
- la figure 8 est une représentation similaire à la figure 6 correspondant à un schéma simplifié pour la transformation en un signal carré de la tension aux bornes, soit de la phase principale, soit de la phase auxiliaire.

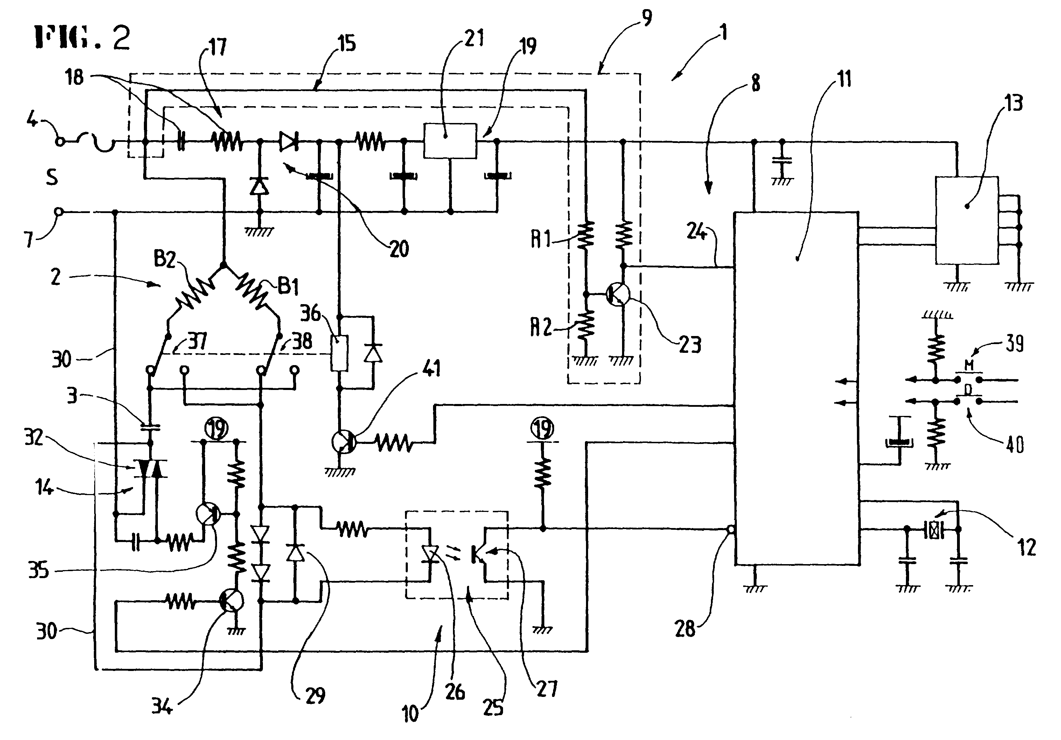

La présente invention est relative à un dispositif 1 de commande d'arrêt de fonctionnement d'un moteur asynchrone 2 à condensateur 3, tel que représenté dans la figure 1. Un mode de réalisation d'un tel dispositif 1 est illustré dans la figure 2.

Ainsi, ce moteur 2 se distingue par un bobinage principal B1 et un bobinage auxiliaire B2 d'une part, raccordés au commun 4 du secteur S et, d'autre part, reliés entre eux par le condensateur de déphasage 3 à même de créer le champ tournant pour la commande en rotation du rotor. A noter, à ce propos, que ce bobinage principal B1 est encore raccordé à la borne 7 du secteur S correspondant à la phase principale ϕ1.

Quant aux dispositifs de commande d'arrêt 1 il a pour but de détecter une éventuelle surcharge du moteur 2 par rapport à une valeur seuil, préférentiellement, du type paramétrable en vue de commander, de manière quasi instantanée, l'arrêt du fonctionnement de ce moteur 2.

Dans ce but et selon l'invention, le dispositif de commande d'arrêt 1 comporte des moyens de mesure 8 du temps de retard et, donc, du déphasage, entre l'un quelconque des paramètres tension U1, U2 ou courant I2, I3 de la phase principale ϕ1 correspondant au bobinage principal B1 ou de la phase secondaire ϕ2 correspondant au bobinage auxiliaire B2 et un autre de ces paramètres U1, U2, I2, I3.

De manière à faciliter la compréhension de cette invention, la description qui va suivre s'attache, plus particulièrement, au mode de réalisation illustré dans la figure 2 et qui correspond au cas où le dispositif 1 comporte des moyens de mesure 8 du temps de retard entre la tension du secteur U1 et le courant I2 traversant le bobinage principal B1 donc entre les paramètres de phase principale ϕ1. Toutefois, plus en avant dans le cadre de cette description, il sera exposé la manière de mesurer le déphasage existant entre d'autres de ces paramètres de la phase principale ϕ1 et la phase secondaire ϕ2.

Ainsi, selon ce mode de réalisation illustré dans la figure 1, ces moyens de mesure 8 comportent des moyens de détection 9 du passage à un seuil prédéterminé, préférentiellement sensiblement à zéro, de la tension de la phase principale ϕ1 qui n'est autre que la tension secteur, ainsi que des moyens de détection 10 du passage à un seuil prédéterminé, préférentiellement sensiblement à zéro, du courant I2 traversant le bobinage principal B1. Il convient d'observer que si l'on préfère détecter le passage, sensiblement à zéro, d'une tension et d'un courant pour mesurer le temps de déphasage, c'est tout simplement que cette solution conduit à la facilité, puisqu'elle permet de s'affranchir de la différence d'échelle existant entre les deux paramètres comparés. Toutefois, la détection du passage à un seuil quelconque est bien sûr envisageable et ne pose d'ailleurs aucun problème lorsque les paramètres comparés sont de nature identique (tension/tension ; courant/courant).

Par ailleurs, le dispositif 1 comporte un microprocesseur 11 relié à une horloge 12 et qui est à même de mesurer le temps de retard en vue de le comparer à une valeur seuil connue d'une mémoire 13 et qui est, préférentiellement, de type paramétrable, ceci dans le but de commander, le cas échéant, l'arrêt du moteur 2 à l'aide de moyens de commande 14 appropriés.

Il convient d'observer que le dispositif comporte, en outre, une alimentation basse tension à courant continu 19 intervenant, notamment, dans la commande du microprocesseur 11. Tout particulièrement, l'on retrouve au niveau des circuits de cette alimentation à courant continu basse tension 19, des moyens 17 pour abaisser la tension et la puissance, ces moyens 17 étant définis, plus particulièrement, par une résistance 18A et un condensateur 18B. Puis cet ensemble est associé à un circuit 20 de redressage du courant de conception classique et précédant un régulateur de tension 21. Par conséquent, en sortie de ce dernier, l'on dispose d'une alimentation à courant continu basse tension à même d'intervenir dans le cadre des commandes logiques reçues ou émises par le microprocesseur 11.

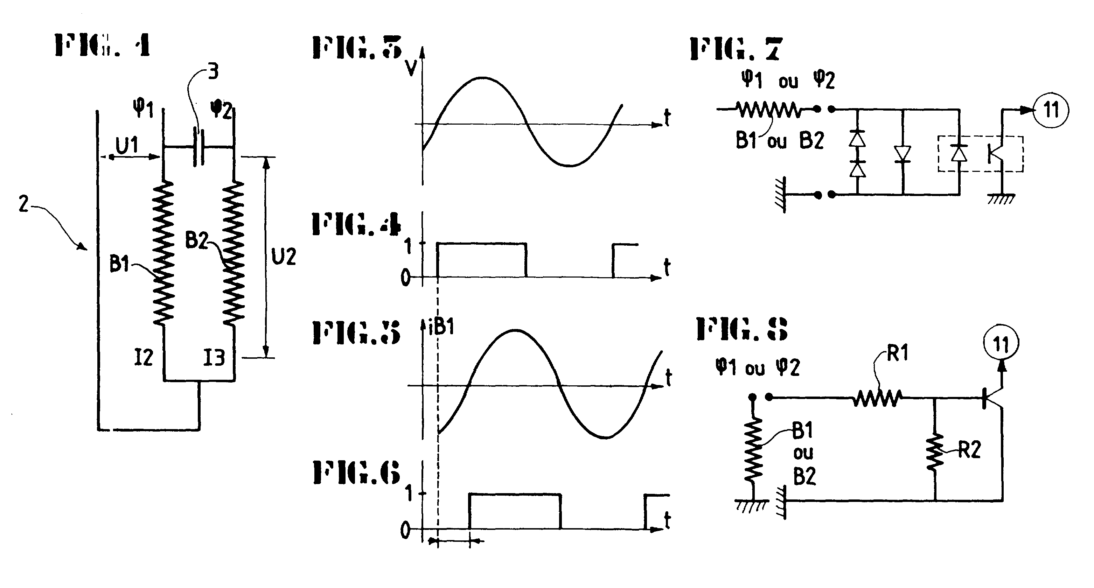

Quant aux moyens de détection 9, ils consistent en un circuit 15 à même de transformer le signal sinusoïdal de la tension secteur, tel que représenté schématiquement dans la figure 3, en un signal sensiblement carré ou chaque saut de tension correspond au passage approximativement à zéro de la tension U1. Ce signal, sensiblement carré est adapté pour constituer une commande logique 0 ou 1 susceptible d'être interprétée par le microprocesseur 11.

Dans ce but, la borne 4 du secteur S correspondant à la phase principale ϕ1, alimente, au travers d'un pont diviseur R1/R2, la base d'un transistor NPN 23 lequel conduit lorsque la tension U1 est positive et, au contraire, se bloque lorsque la tension U1 est négative ou nulle. Par conséquent, dès l'instant que cette tension U1 devient positive, ce transistor NPN 23 vient relier la broche 24 du microprocesseur 11 à la masse correspondant à une commande logique à l'état zéro. Contrairement, en cas de tension négative ou nulle, le transistor NPN 23 est bloqué de sorte que la broche 24 du microprocesseur est reliée à l'alimentation basse tension 19 correspondant à une commande logique d'état 1.

Pour en revenir à la généralisation du dispositif 1 qui prévoit la possibilité de mesurer le déphasage entre différents paramètres de la phase principale ϕ1 et de la phase secondaire ϕ2, l'on observera que la figure 8 est une représentation simplifiée de ces moyens de détection 9 appliqués à une phase quelconque pour relever les passages à zéro d'une tension U1 ou U2 dans cette phase. Ainsi, l'on y retrouve le pont diviseur R1/R2 au travers duquel l'on vient alimenter la base d'un transistor NPN.

Quant aux moyens de détection 10 du passage à zéro du courant I2 dans la phase principale ϕ1 et, donc, traversant le bobinage principal B1, ils comportent un optocoupleur 25 comprenant une diode led 26 qui, lorsqu'elle conduit et, donc lorsqu'elle est traversée par un courant, entraîne la polarisation de la base d'un phototransistor NPN 27 afin de le rendre conducteur. A ce moment là, une broche 28 du microprocesseur 11, étant reliée à la masse, détecte un etat de commande logique 0. Dans le cas contraire, c'est-à-dire lorsque la diode led 26 est bloquée, le phototransistor NPN 27 est bloqué à son tour de sorte que la broche 28 est alors reliée à l'alimentation basse tension 19 entraînant une commande logique à l'état 1. L'on comprendra, aisément, qu'au lieu d'utiliser un phototransistor 27 NPN, l'on peut faire appel à un phototransistor PNP en inversant, par exemple, le montage de la diode led 26 dans le circuit.

Cet optocoupleur 25 est monté en parallèle, à un shunt de courant à diode 29 sur le raccordement électrique 30 reliant le bobinage principal B1 à la borne 7 du secteur S.

Ainsi, au travers de cet optocoupleur 25, il est transmis au microprocesseur 11 un signal sensiblement carré (voir figures 5 et 6), dont chaque transition, assimilable au passage d'une commande logique de l'état 0 à l'état 1 ou inversement, correspond au passage sensiblement à zéro du courant traversant dans ce cas, le bobinage principal B1.

Là encore, ces moyens de détection 10 sont représentés, dans leur généralisation pour la mesure d'un courant I2 ou I3 circulant dans la phase principale ϕ1 ou dans la phase secondaire ϕ2 dans la figure 7 des dessins ci-joints. L'on y voit, tout particulièrement, la présence de cet optocoupleur 25 qui est alimenté par un shunt de courant à diode 29.

Par conséquent, en fonction des paramètres dont on désire déterminer le déphasage, l'on utilisera, selon le cas, des moyens de détection 9, tels qu'illustrés dans la figure 8, associés à la phase principale ϕ1 et/ou à la phase secondaire ϕ2 ou encore des moyens de détection 10, tels que représentés dans la figure 7 qui peuvent, là encore, être associés à ladite phase principale ϕ1 ou à la phase secondaire ϕ2.

Ainsi, si l'on désire mesurer le déphasage entre la tension U1 de la phase principale ϕ1 et le courant I2 de la phase principale ϕ1, il est retenu une combinaison des moyens de détection 9, 10 tels qu'illustrés dans la figure 2.

Dans le cadre de la mesure du déphasage entre la tension U2 dans la phase secondaire ϕ2 et le courant I3 dans la phase secondaire ϕ2, l'on retrouvera cette combinaison de moyens de détection 9, 10 tels qu'illustrés dans la figure 1, mais appliquée, plus particulièrement, à ladite phase secondaire ϕ2 et, donc, au bobinage auxiliaire B2.

Dans le cadre de la mesure du déphasage entre la tension U1 dans le bobinage principal B1 (phase principale) et la tension U2 dans le bobinage auxiliaire B2 (phase secondaire), l'on appliquera, à chacune des phases, des moyens de détection 9 tels qu'illustrés dans la figure 8.

Finalement, s'il s'agit de mesurer le déphasage entre le courant I2 traversant le bobinage principal B1 et le courant I3 traversant le bobinage auxiliaire B2, il convient d'associer, à chacune des phases, des moyens de détection 10 correspondant au schéma de la figure 7 et faisant appel, tout particulièrement, à un optocoupleur lequel a l'avantage de procurer une isolation galvanique entre l'alimentation secteur et l'alimentation du microprocesseur 11.

Finalement, au travers de ces signaux de forme carrée délivrés par lesdits moyens de détection 9, 10, il est aisé, au microprocesseur 11 et grâce à l'horloge 12, de mesurer, à chaque alternance, le retard entre les deux paramètres pris en compte pour la mesure du déphasage et de le comparer à un temps correspondant à une valeur seuil, préférentiellement paramétrable. Toutefois, il faut observer que pendant les phases transitoires correspondant au démarrage du moteur 2 il se produit des fluctuations au niveau de ce déphasage. Aussi, de manière à éviter que le dispositif ne provoque des arrêts intempestifs du moteur 2, il est prévu que les moyens mesure 8 du temps de retard n'interviennent pas pendant ces périodes transitoires de démarrage. Plus exactement, les mesures ne sont effectuées ou encore ne sont interprétées par les microprocesseurs 11 qu'après écoulement d'un temps donné assimilable à cette phase de démarrage du moteur 2, temps correspondant, préférentiellement, à un nombre déterminé d'alternance de la tension U1, U2 ou du courant I2, I3.

Une fois cette période transitoire écoulée, les moyens de mesure 8 jouent pleinement leur rôle de sorte que, en cas de mesure d'un déphasage donné, le dispositif 1 commande l'arrêt de fonctionnement du moteur 2.

En fait, tel que déjà précisé plus haut, la valeur seuil de référence est du type paramétrable. L'objectif étant de pouvoir arrêter le moteur 2 non pas, simplement, lorsqu'il est amené à produire un couple supérieur à une valeur limite donnée, mais, également, lorsqu'au cours d'un cycle de fonctionnement, l'on constate une augmentation, voire même une diminution brutale et anormale du couple produit par le moteur. Si l'on prend l'exemple d'un volet roulant motorisé et si l'on retient le cas plus particulier du cycle d'enroulement du tablier partant d'une position dépliée pour aller jusqu'à une position totalement repliée, l'on sait qu'en raison d'une diminution progressive dudit poids du tablier, le moteur est amené à fournir un couple progressivement plus réduit. Par conséquent, si, au cours de ce cycle, ce couple tend brutalement à augmenter, cela signifie qu'il y a blocage dans le déplacement du tablier. Or, si, le dispositif n'est à même de commander l'arrêt du moteur qu'en cas de dépassement d'une valeur seuil figée, le moteur va, forcément, jusqu'à produire le couple maximum autorisé. Or, dans le cadre d'un blocage, précisément, du déplacement d'une lame du tablier, celle-ci peut ne pas résister à cette puissance communiquée par le moteur 2. Il a également été exposé, plus haut dans la description, le problème de l'arrivée en fin de course haute du tablier où le moteur fournit normalement un couple minimum.

De manière à remédier à ces inconvénients, le dispositif de commande 1, conforme à l'invention comporte, en outre, des moyens de détermination de l'évolution dans le temps du déphasage des paramètres comparés en vue de mesurer une variation brutale de cette évolution et commander l'arrêt de fonctionnement du moteur 2 lors de la détection d'une telle variation brutale de ce déphasage.

Ainsi, ces moyens de détermination associés au microprocesseur 1 ont pour fonction de calculer la dérivée brute Db qui est obtenue en soustrayant au déphasage mesuré à un instant donné, la valeur de déphasage mesurée précédemment. Selon un premier mode de réalisation si la valeur de cette dérivée est supérieure à une valeur seuil (dénommée seuil dérivé) en mémoire 13, l'on en déduit une évolution anormale du déphasage et, donc, l'obligation d'arrêter le moteur 2.

Toutefois, dans le cadre de ce procédé de détermination de l'évolution du déphasage, il convient d'observer que le calcul de la dérivée brute Db à un instant donné peut être fortement influencé par une cause qui n'est pas proprement liée à une augmentation brutale du couple produit par le moteur 2. Ainsi, peuvent intervenir, au cours de la mesure, le bruit électronique et autres paramètres influents.

Dans ce but, il est préconisé selon l'invention, de procéder au calcul d'une dérivée glissante Dg(x) qui consiste à ajouter au calcul de la dérivée brute Db, déterminée dans les conditions précédemment évoquées, la valeur de la dérivée glissante Dg(x-1) calculée précédemment, laquelle va être multipliée par un coefficient de filtrage donné. Il s'agit donc d'une fonction itérative et lors du calcul de la dérivée glissante Dg(x + 1) correspondant à la mesure suivante, l'on tiendra compte de cette dérivée glissante Dgx que l'on vient de calculer à laquelle on appliquera le coefficient de filtrage. A ce propos, lors de la première mesure du déphasage, au-delà de la période de fonctionnement transitoire, la mesure de la dérivée glissante Dg1 correspond à la dérivée brute Dbl. Quant à la dérivée glissante Dg2 déterminée au point suivant, elle correspondra, par conséquent, à la dérivée brute Db2 déterminée à cet instant plus la dérivée brute Db1 à l'instant précédent multipliée par ledit coefficient de filtrage.

Finalement, l'on ne commandera l'arrêt du moteur que lorsque la dérivée glissante est supérieure à une valeur seuil, ce qui permet de s'assurer, en quelque sorte, que l'évolution de la courbe va effectivement dans le sens non souhaité dans la mesure où on tient compte, non seulement, de la dérivée brute à un instant donné, mais également de celle ayant été calculée au cours d'une ou plusieurs alternances précédentes. Ainsi, la fonction appliquée pour le calcul de cette dérivée glissante à un point donné est du type :
- Dgx = A . Dbx + A' . Db(x - 1) + A" . Db(x-2) etc ....
- avec Dgx : dérivée glissante au point x
- Dbx dérivée brute à ce point x
- A, A', A" etc .. coefficient

A noter que cette fonction peut être définie de sorte que l'on ne tienne compte, effectivement, des dérivées brutes correspondant à un nombre de points limités. On notera que si l'on peut déterminer le déphasage sur une alternance, cette opération peut être répétée sur chaque alternance, tout comme la dérivée glissante peut être déterminée avec la même périodicité.

Aussi, la commande d'arrêt du moteur 2 peut être obtenue, d'une part, lorsque le déphasage entre deux paramètres dudit moteur 2 dépasse une valeur seuil donnée et, d'autre part, lorsque la dérivée glissante Dg de la courbe d'évolution de ce déphasage est elle-même supérieure à une valeur seuil ce qui permet, précisément, de commander cet arrêt du moteur en cas de dysfonctionnement anormal de ce dernier et avant même qu'il atteigne le couple maximal autorisé.

Tel que précisé plus haut, l'arrêt du fonctionnement du moteur 2 est obtenu par l'intermédiaire de moyens 14 comportant, principalement un triac 32. Préférentiellement, ce triac 32, monté sur le raccordement électrique 30 reliant le bobinage principal B1 à la borne 7 du secteur S est alimenté lorsque la commande logique issue du microprocesseur 11 est à l'état 0. Ce montage est préféré dans la mesure où il conduit à une consommation énergétique moindre. Aussi, un montage inverse serait envisageable.

Pour en revenir à la situation correspondant à la figure 2 du dessin ci-joint, lorsque le microprocesseur 11 détecte un temps de retard inférieur à la valeur seuil en mémoire 13 ou encore s'il détecte une évolution anormale du temps de déphasage entre les deux paramètres mesurés, il émet, au travers de sa broche 33, un ordre logique à l'état 1. Plus précisément, il vient alimenter la base d'un transistor NPN 34 reliant à la masse la base d'un transistor PNP 35. Celui-ci est alors bloqué n'alimentant plus le triac 32 lequel coupe la liaison électrique 30 raccordant le bobinage principal B1 au secteur S.

Tel que précisé plus haut, selon le sens de rotation communiqué au moteur 2, l'un ou l'autre des bobinages B1, B2 devient principal. Aussi, pour que le dispositif de commande d'arrêt 1 puisse intervenir, quel que soit le sens de rotation communiqué au moteur 2, il est nécessaire de dédoubler les moyens de détection 10, montés, en série, sur chacun des raccordements électriques reliant le bobinage B1, B2 au secteur S au travers d'un relais RT de commande de changement de sens. Toutefois, selon un mode de réalisation préférentiel, le dispositif de commande d'arrêt 1 comporte un relais RT 36 à même de commander deux contacts 37, 38 venant raccorder selon le cas, le bobinage B1 ou le bobinage B2 au secteur S par l'intermédiaire du raccordement électrique 30 comportant les moyens de détection 10. Simultanément, l'autre bobinage, respectivement B2, B1 est commuté au travers de ces contacts 37, 38 en tant que bobinage auxiliaire.

La commande du relais RT 36 est assurée par l'intermédiaire d'un ordre logique transmis par le microprocesseur 11 réceptionnant, lui-même, une commande logique transmise par l'intermédiaire de boutons poussoirs M et D monostables normalement ouverts 39, 40.

Ainsi, au cas où, lors de la commande précédente, le microprocesseur 11 a reçu un ordre logique à l'état 1 en provenance du bouton poussoir M 39 et qu'il perçoit, à présent, un ordre logique à l'état 1 provenant du bouton poussoir D 40, il transmet un ordre logique à l'état 1 en direction d'un transistor NPN 41 dont la base est alors polarisée. Ce transistor NPN 41 étant, dans ces conditions, conducteur, il vient raccorder le relais RT 36 à la masse, lequel relais étant, par ailleurs, raccordé au commun 4 du secteur de sorte qu'il est alimenté provoquant le basculement des contacts 37, 38 et le changement de sens de la rotation du moteur 2.

Il convient de rappeler, à ce stade, que si la description ci-dessus s'attache, plus particulièrement, au mode de réalisation illustré dans la figure 2 correspondant au cas de la mesure de déphasage entre la tension U1 et le courant I2 de la phase principale ϕ1, la situation est identique lorsque des paramètres différents sont comparés du point de vue de leur déphasage.

En définitive et tel que précisé plus haut dans la description en tenant compte de la relation de proportionnalité qui lie, d'une part, le temps de retard entre l'un des paramètres courant ou tension de la phase principale ϕ1 ou de la phase secondaire ϕ2 du moteur 2 et un autre de ces paramètres, et, d'autre part, la charge dudit moteur relation qui, plus est, est indépendante des caractéristiques de ce dernier et, notamment, de sa température ou encore de la capacité du condensateur de déphasage, il a été possible d'obtenir un dispositif de commande d'arrêt conduisant à un temps de réponse quasi instantané et à une précision non encore égalée.

En outre, ce dispositif ayant la possibilité de déterminer une évolution anormale de la courbe correspondant au déphasage des paramètres comparés au cours d'un cycle de fonctionnement donné, il permet d'éviter une éventuelle détérioration du matériel.

Tout particulièrement, la présente invention trouvera une application avantageuse dans le domaine de la motorisation des volets roulants lesquels posent bon nombre de problèmes que ce soit au cours des cycles d'enroulement ou de déroulement du tablier ou encore pour la commande d'arrêt du moteur en fin de course.

Finalement, la présente invention permet, réellement d'envisager cet arrêt du moteur en fin de course haute et basse du volet roulant sans qu'il n'y ait de risque de rupture du tablier en raison, par exemple, du retard de la commande d'arrêt procurée, habituellement, par les dispositifs antérieurement connus.

En outre, le dispositif est en mesure de détecter une défaillance des composants du moteur. Ainsi, le court-circuit du condensateur entraîne, obligatoirement, un déphasage qui est en dehors des normes Plus précisément, ce déphasage tend à évoluer de façon anormale lorsqu'on prend en compte la dérivée de la courbe. De la même manière et, pour les mêmes raisons, le dispositif est en mesure de détecter un court-circuit au niveau des bobinages B1, B2.

Il convient de noter que pour l'heure et en l'absence d'un tel dispositif, conforme à l'invention, un tel court-circuit du condensateur ou des bobinages entraîne un échauffement du moteur jusqu'à obtenir la coupure de son alimentation au travers de la sécurité thermique venant équiper, usuellement, ce type de moteur asynchrone à condensateur, ceci conformément aux normes applicables.

En comparaison, grâce au dispositif selon l'invention, la sécurité thermique n'est pas sollicitée en cas de défaillance laquelle est détectée avant détérioration totale du moteur.

Finalement, grâce à la présente invention, il est possible, dans le cadre de l'application spécifique à des volets roulants motorisés, d'utiliser un moteur normalement destiné à des volets roulants de grande taille, également pour des volets roulants de taille réduite, sans qu'il n'y ait un risque quelconque de détériorer celui-ci en raison d'une surpuissance de ce moteur. Cela permet, non seulement, une standardisation au niveau des produits, mais, évite également, la fabrication de moteurs de petite taille qui sont, souvent, d'un coût de revient supérieur.

## Revendications

1. Dispositif de commande d'arrêt du fonctionnement d'un moteur (2) asynchrone monophasé à condensateur (3) comprenant un bobinage principal (B1) et un bobinage auxiliaire (B2), ceci en cas de détection d'une surcharge de ce moteur (2) par rapport à une valeur seuil, caractérisé par le fait qu'il comporte, d'une part, des moyens de mesure (8) du déphasage entre l'un quelconque des paramètres, tension ou courant (U1, U2, I2, I3) de la phase principale (ϕ1) correspondant au bobinage principal (B1) ou de phase secondaire (ϕ2) correspondant au bobinage auxiliaire (B2) et un autre de ces paramètres et, d'autre part, des moyens de commande d'arrêt (14) à même de couper l'alimentation du moteur (2) en cas de mesure d'un temps de retard inférieur à une valeur seuil en mémoire (13).

2. Dispositif de commande d'arrêt selon la revendication 1, caractérisé par le fait que les moyens de mesure (8) comportent, selon le cas, des moyens de détection (9) du passage, à un seuil prédéterminé, préférentiellement, sensiblement à zéro, d'une tension (U1, U2) de la phase principale (ϕ1) et/ou de la phase secondaire (ϕ2) et/ou des moyens de détection (10) du passage, à un seuil, préddéterminé, préférentiellement, sensiblement à zéro, du courant (I2, I3) traversant ladite phase (ϕ1) et/ou la phase secondaire (ϕ2).

3. Dispositif de commande d'arrêt selon l'une quelconque des revendications 1 et 2, caractérisé par le fait qu'il comporte un microprocesseur (11), auquel est associée une horloge (12) et qui et à même de mesurer le temps de déphasage en vue de la comparer à une valeur seuil, préférentiellement, paramétrable, connue au niveau d'une mémoire (13) pour commander, le cas échéant, l'arrêt du moteur (2) par l'intermédiaire desdits moyens de commande d'arrêt (14).

4. Dispositif de commande d'arrêt selon les revendications 2 et 3, caractérisé par le fait que les moyens de détection (9) du passage, sensiblement à zéro, d'une tension (U1, U2) consiste en un circuit (15) à même de transformer le signal sinusoïdal de ladite tension (U1) ou (U2) en un signal sensiblement carré où chaque saut de tension correspond au passage, approximativement à zéro, de ladite tension (U1) ou (U2), ce signal sensiblement carré constituant une commande logique du type 0 ou 1 susceptible d'être interprétée par le microprocesseur (11).

5. Dispositif de commande d'arrêt selon les revendications 2 et 3, caractérisé par le fait que les moyens de détection (10) du passage à zéro d'un courant (I2, I3) traversant la phase principale (ϕ1) ou la phase secondaire (ϕ2) comporte un optocoupleur (25) à même de transmettre au microprocesseur (11) un signal sensiblement carré dont chaque transition, assimilable au passage d'une commande logique de l'état 0 à l'état 1 ou inversement, correspond au passage sensiblement à zéro du courant (I2) ou (I3).

6. Dispositif de commande d'arrêt selon la revendication 5, caractérisé par le fait que l'optocoupleur (25) est monté par l'intermédiaire d'un shunt de courant à diode (29) sur un raccordement électrique (30) reliant le bobinage principal (B1) ou le bobinage auxiliaire (B2) du moteur (2) au secteur (S).

7. Dispositif de commande d'arrêt selon les revendications 5 et 6, caractérisé par le fait qu'il comporte un relais RT (36) à même de commander deux contacts (37, 38) venant raccorder, selon le cas, le bobinage (B1) ou (B2) au secteur (S) en vue de la commande d'inversion de sens de rotation dudit moteur (2).

8. Dispositif de commande d'arrêt selon la revendication 7, caractérisé par le fait que la commande du relais RT (36) est assurée par l'intermédiaire d'un ordre logique transmis par le microprocesseur (11) sous l'impulsion d'une commande logique issue de boutons poussoirs (M) et (D) monostables normalement ouverts (39, 40).

9. Dispositif de commande d'arrêt selon les revendications 1 et 6, caractérisé par le fait que les moyens de commande d'arrêt (14) comportent un triac (32) monté sur le raccordement électrique (30) reliant le bobinage principal (B1) ou le bobinage auxiliaire (B2) au secteur (S), l'alimentation de ce triac (32) étant interrompue sous l'impulsion d'une commande logique issue du microprocesseur (11).

10. Dispositif de commande d'arrêt selon l'une quelconque des revendications précédentes, caractérisé par le fait qu'il comporte des moyens pour déterminer l'évolution du déphasage entre les paramètres (U1, U2, I2, I3) comparés en vue de détecter une variation brutale de cette évolution au travers du calcul de sa dérivée brute (Db) consistant à soustraire à la valeur du déphasage mesuré à un instant donné, la valeur du déphasage mesuré lors de l'instant précédent et de comparer ladite dérivée brute par rapport à une valeur seuil qui, lorsqu'elle est atteinte ou dépassée, conduit à la commande d'arrêt par le microprocesseur (11) du moteur (2) par l'intermédiaire des moyens (14).

11. Dispositif de commande d'arrêt selon la revendication 10, caractérisé par le fait que les moyens pour déterminer l'évolution du déphasage procèdent au calcul d'une dérivée glissante (Dg) consistant en une fonction itérative tenant compte de la dérivée brute (Db) calculée à un instant donné ainsi que de la dérivée glissante (Dg) déterminée à l'instant précédent, cette fonction étant du type :
- Dgx = A . Dbx + A' . Dg(x - 1)
- où Dgx est la dérivée glissante à un instant x donné
- Dg(x - 1) est la dérivée glissante à l'instant précédent (x - 1)
- A et A' étant des coefficients de filtrage

12. Application du dispositif de commande d'arrêt selon l'une quelconque des revendications 1 à 11 pour la commande de fin de course haute et basse et d'arrêt sur obstacle d'un tablier d'un volet roulant comportant un moteur asynchrone monophasé à condensateur.

## Patentansprüche

1. Steuervorrichtung zum Ausschalten des Betriebs eines einphasigen Asynchronmotors (2) mit Kondensator (3), der eine Hauptspulung (B1) und eine Hilfsspulung (B2) umfaßt, und zwar im Falle einer Feststellung einer Überbelastung dieses Motors (2) im Bezug auf einen Schwellwert, dadurch gekennzeichnet, daß sie, einerseits, Mittel (8) zum Messen der Phasenverschiebung zwischen irgendeinem der Parameter, Spannung oder Strom (U1, U2, I2, I3), der der Hauptspulung (B1) entsprechenden Hauptphase (ϕ1) bzw. der Hilfsspulung (B2) entsprechenden Sekundärphase (ϕ2) und einem anderen dieser Parameter und, andererseits, Ausschaltsteuermittel (14), die in der Lage sind, den Stromzufuhr zum Motor (2) im Falle einer Messung einer Verzugszeit, die niedriger ist als ein im Speicher (13) gespeicherter Schwellwert, zu unterbrechen, umfaßt.

2. Ausschaltsteuervorrichtung nach Anspruch 1, dadurch gekennzeichnet, daß die Meßmittel (8) je nach dem Fall Mittel (9) zum Feststellen des Durchgangs an einer vorbestimmten Schwelle, vorzugsweise des im wesentlichen Nulldurchgangs, einer Spannung (U1, U2) der Hauptphase (ϕ1) und/ oder der Sekundärphase (ϕ2) und/oder Mittel (10) zum Feststellen des Durchgangs an einer vorbestimmten Schwelle, vorzugsweise des im wesentlichen Nulldurchgangs, des durch die genannte Phase (ϕ1) und/oder die Sekundärphase (ϕ2) fließenden Stroms (I2, I3) umfassen.

3. Ausschaltsteuervorrichtung nach irgendeinem der Ansprüche 1 und 2, dadurch gekennzeichnet, daß sie einen Mikroprozeßor (11) umfaßt, dem eine Uhr (12) zugeordnet ist und der in der Lage ist, die Phasenverschiebungszeit zu messen, um sie mit einem bekannten, in einem Speicher (13) gespeicherten, vorzugsweise parametrierbaren Schwellwert zu vergleichen, um gegebenfalls die Ausschaltung des Motors (2) über die genannten Ausschaltsteuermittel (14) zu steuern.

4. Ausschaltsteuervorrichtung nach Ansprüchen 2 und 3, dadurch gekennzeichnet, daß die Mittel (9) zum Feststellen des im wesentlichen Nulldurchgangs einer Spannung (U1, U2) aus einer Schaltung (15) bestehen, die geeignet ist, das Sinussignal der genannten Spannung (U1) bzw. (U2) in ein im wesentlichen Rechtecksignal umzuwandlen, wo jeder Spannungssprung dem ungefähr Nulldurchgang der genannten Spannung (U1) bzw. (U2) entspricht, wobei dieses im wesentlichen Rechtecksignal ein logischer 0- oder 1-Befehl bildet, der geeignet ist, vom Mikroprozeßor (11) interpretiert zu werden.

5. Ausschaltsteuervorrichtung nach Ansprüchen 2 und 3, dadurch gekennzeichnet, daß die Mittel (10) zum Feststellen des Nulldurchgangs eines durch die Hauptphase (ϕ1) bzw. die Sekundärphase (ϕ2) fließenden Stroms (I2, I3) einen Optokoppler (25) umfassen, der geeignet ist, dem Mikroprozeßor (11) ein im wesentlichen Rechtecksignal zuzusenden, dessen Übergang, der dem Übergang eines logischen Befehls vom 0-Zustand in den 1-Zustand oder umgekehrt vergleichbar ist, jeweils dem im wesentlichen Nulldurchgang des Stromes (I2) bzw. (I3) entspricht.

6. Ausschaltsteuervorrichtung nach Anspruch 5, dadurch gekennzeichnet, daß der Optokoppler (25) über eine Diodenstromüberbrückung (29) in einer elektrischen Verbindung (30), die die Hauptspulung (B1) bzw. die Hilfsspulung (B2) des Motors (2) mit dem Netz (S) verbindet, montiert ist.

7. Ausschaltsteuervorrichtung nach Ansprüchen 5 und 6, dadurch gekennzeichnet, daß sie ein RT-Relais (36) umfaßt, das geeignet ist, zwei Kontakte (37, 38) zu betätigen, die je nach dem Fall die Spulung (B1) bzw. die Spulung (B2) mit dem Netz (S) verbinden, um den Umkehr der Drehrichtung des genannten Motors (2) zu steuern.

8. Ausschaltsteuervorrichtung nach Anspruch 7, dadurch gekennzeichnet, daß die Betätigung des RT-Relais (36) über einen logischen Befehl gesichert wird, der unter dem Impuls eines von monostabilen, normal geöffneten Druckknöpfen (M) und (D) (39, 40) kommenden logischen Befehls vom Mikroprozeßor (11) ausgesandt wird.

9. Ausschaltsteuervorrichtung nach Ansprüchen 1 und 6, dadurch gekennzeichnet, daß die Ausschaltsteuermittel (14) einen in der elektrischen Verbindung (30), die die Hauptspulung (B1) bzw. die Hilfsspulung (B2) mit dem Netz (S) verbindet, angebrachten Triac (32) umfassen, wobei die Speisung dieses Triacs (32) unter dem Impuls eines vom Mikroprozeßor (11) kommenden logischen Befehls unterbrochen wird.

10. Ausschaltsteuervorrichtung nach irgendeinem der vorgehenden Ansprüche, dadurch gekennzeichnet, daß sie Mittel zur Bestimmung des Verlaufs der Phasenverschiebung zwischen den verglichenen Parametern (U1, U2, I2, I3) umfaßt, um eine plötzliche Änderung dieses Verlaufs durch die Berechnung deren Bruttodifferentialquotienten (Db) festzustellen, die darin besteht, vom zu einem gegebenen Zeitpunkt gemessenen Phasenverschiebungswert den zum vorigen Zeitpunkt gemessenen Phasenverschiebungwert zu subtrahieren, und den genannten Bruttodifferentialquotienten mit einem Schwellwert zu vergleichen, der, wenn er erreicht oder überschritten ist, zur Steuerung der Ausschaltung des Motors (2) vom Mikroprozeßor (11) über die Mittel (14) führt.

11. Ausschaltsteuervorrichtung nach Anspruch 10, dadurch gekennzeichnet, daß die Mittel zur Bestimmung des Verlaufs der Phasenverschiebung die Berechnung eines gleitenden Differentialquotienten (Dg) vornehmen, die aus einer iterativen Funktion besteht, die den zu einem gegebenen Zeitpunkt berechneten Bruttodifferentialquotienten (Db) sowie den zum vorigen Zeitpunkt bestimmten gleitenden Differentialquotienten (Dg) berücksichtigt, wobei diese Funktion der folgenden Art ist:
- Dgx = A . Dbx + A' . Dg(x-1)
- wo Dgx der gleitende Differentialquotient zu einem gegebenen Zeitpunkt x ist
- Dg(x-1) der gleitende Differentialquotient zum vorigen Zeitpunkt (x-1) ist
- A und A' Filtrierkoeffizienten sind.

12. Anwendung der Ausschaltsteuervorrichtung nach irgendeinem der Ansprüche 1 bis 11 für die Steuerung des oberen und des unteren Hubendes und des Anhalten bei einem Hindernis einer Decke eines Rolladens, der einen einphasigen Asynchronmotor mit Kondensator umfaßt.

## Claims

1. Device for controlling the interruption of the operation of a single-phase asynchronous motor (2) with capacitor (3), comprising a main coiling (B1) and an auxiliary coiling (B2), this in the event of detection of an overload of this motor (2) with respect to a threshold value, characterized in that it includes, on the one hand, means (8) for measuring the phase shift between any of the parameters, voltage or current (U1, U2, I2, I3), of the main phase (ϕ1) corresponding to the main coiling (B1) or of the secondary phase (ϕ2) corresponding to the auxiliary coiling (B2) and another of these parameters and, on the other hand, means (14) for controlling the stoppage capable of interrupting the power supply to the motor (2) in the event a time of delay lower than a threshold value stored in memory (13) is measured.

2. Device for controlling the interruption according to claim 1, characterized in that the measuring means (8) include, as the case may be, means (9) for detecting the passage at a predetermined threshold, preferably the substantially zero passage, of a voltage (U1, U2) of the main phase (ϕ1) and/or of the secondary phase (ϕ2) and/or means (10) for detecting the passage at a predetermined threshold, preferably the substantially zero passage, of the current (I2, I3) flowing through said phase (ϕ1) and/or the secondary phase (ϕ2).

3. Device for controlling the interruption according to any of claims 1 and 2, characterized in that it includes a microprocessor (11) which a clock (12) is associated with and which is capable of measuring the time of phase shift with a view to comparing same to a known, preferably parameterable threshold value at the level of a memory (13), in order to control, should the case arise, the stoppage of the motor (2) through said means (14) for controlling the stoppage.

4. Device for controlling the interruption according to claims 2 and 3, characterized in that the means (9) for detecting the substantially zero passage of a voltage (U1, U2) consist in a circuit (15) capable of converting the sinusoidal signal of said voltage (U1) or (U2) into a substantially square signal where each voltage jump corresponds to the approximately zero passage of said voltage (U1) or (U2), this substantially square signal forming a 0- or 1-type logic command capable of being interpreted by the microprocessor (11).

5. Device for controlling the interruption according to claims 2 and 3, characterized in that the means (10) for detecting the zero passage of a current (I2, I3) flowing through the main phase (ϕ1) or the secondary phase (ϕ2) include an optocoupler (25) capable of transmitting to the microprocessor (11) a substantially square signal each transition of which, which can be assimilated to the passage of a logic command from the 0-state to the 1-state or vice-versa, corresponds to the substantially zero passage of the current (I2) or (I3).

6. Device for controlling the interruption according to claim 5, characterized in that the optocoupler (25) is connected through a diode current shunt (29) on an electric link (30) connecting the main coiling (B1) or the auxiliary coiling (B2) of the motor (2) to the mains (S).

7. Device for controlling the interruption according to claims 5 and 6, characterized in that it includes a RT relay (36) capable of controlling two contacts (37, 38) which connect, as the case may be, the coiling (B1) or (B2) to the mains (S) with a view to controlling the reversal of the direction of rotation of said motor (2).

8. Device for controlling the interruption according to claim 7, characterized in that the control of the RT relay (36) is assured through a logic command transmitted by the microprocessor (11) under the impulse of a logic command coming from monostable normally open push-buttons (M) and (D) (39, 40).

9. Device for controlling the interruption according to claims 1 and 6, characterized in that the means (14) for controlling the stoppage include a triac (32) installed on the electric link (30) connecting the main coiling (B1) or the auxiliary coiling (B2) to the mains (S), the current supply to this triac (32) being interrupted under the impulse of a logic command coming from the microprocessor (11).

10. Device for controlling the interruption according to any of the preceding claims, characterized in that it includes means for determining the evolution of the phase shift between the parameters (U1, U2, I2, I3) compared with a view to detecting a sudden variation of this evolution through calculating its gross derivate (Db) consisting in substracting from the value of the phase shift measured at a given moment the value of the phase shift measured at the previous moment and in comparing said gross derivative to a threshold value which, when it has been reached or exceeded, leads to controlling the stoppage of the motor (2) by the microprocessor (11) through the means (14).

11. Device for controlling the interruption according to claim 10, characterized in that the means for determining the evolution of the phase shift proceed to calculating a sliding derivative (Dg) consisting in an iterative function taking into consideration the gross derivative (Db) calculated at a given moment as well as the sliding derivative (Dg) determined at the preceding moment, this function being of the type:
- Dgx = A . Dbx + A' . Dg(x-1)
- where Dgx is the sliding derivative at a given moment x
- Dg(x-1) is the sliding derivative at the preceding moment (x-1)
- A and A' being filtering coefficients.

12. Application of the device for controlling the interruption according to any of the claims 1 to 11 to the control of the upper and lower travel end and the stoppage on an obstacle of an apron of a roller blind including a single-phase asynchronous motor with capacitor.
